# EUROPEAN PATENT SPECIFICATION

(11) **EP 4 251 907 B1**
(45) Date of publication and mention of the grant of the patent: **20.11.2024**
(21) Application number: 21810739.9
(22) Date of filing: 05.11.2021
(51) Int. Cl.: F16K 1/30, F16K 1/36, F17C 13/04

(54) **SEALING ASSEMBLY FOR A VALVE OF A FUEL CELL FOR A VEHICLE**
DICHTUNGSANORDNUNG FÜR EIN VENTIL EINES BRENNSTOFFZELLEN-FAHRZEUGSYSTEMS
ENSEMBLE D'ÉTANCHÉITÉ POUR UNE SOUPAPE D'UN SYSTÈME DE VÉHICULE À PILES À COMBUSTIBLE

(30) Priority: 26.11.2020 IT 202000028562
(43) Date of publication of application: 04.10.2023
(73) Proprietor: OMB Saleri S.p.A. - Societa' Benefit, 25126 Brescia (IT)
(72) Inventor: BERARDI, Mario, 25126 Brescia (IT); PALAZZI, Andrea, 25126 Brescia (IT)
(74) Representative: Pulieri, Gianluca Antonio
(86) International application number: PCT/IB2021/060252
(87) International publication number: WO 2022/112890

(56) References cited:
- CN-A- 104 019 256
- JP-A- 2020 097 960
- US-A1- 2004 000 659

## Description

The present invention relates to the field of valves for fuel cell vehicle systems, and in particular to the field of valves for managing the flow of hydrogen between a tank and the fuel cells. In particular, the present invention relates to a sealing assembly for a valve.

In a fuel cell vehicle system, hydrogen is stored in a high-pressure tank, typically 700 or 350 bar. A multifunction valve is applied to the tank, usually called OTV (On-Tank-Valve), which allows the introduction of hydrogen into the tank (refilling function) and the release of hydrogen towards the downstream user devices (fueling function). The multifunction valve is provided with numerous functional devices, such as a solenoid opening device, a thermal safety device and manual shut-off taps.

The components of these functional devices, which must ensure excellent sealing against gas leaks, are typically subject to the high pressures of hydrogen. There is therefore the need to adopt reliable technical solutions, such as to ensure gas tightness under pressure for the entire programmed life of the multifunction valve. JP 2020 097.960 discloses a valve according to the preamble of claim 1.

The object of the present invention is that of implementing a multifunction valve provided with a sealing assembly capable of meeting the above mentioned requirements.

Such an object is achieved by a multifunction valve according to claim 1. The dependent claims disclose further advantageous embodiments of the invention.

The features and the advantages of the multifunction valve according to the present invention appear more clearly from the following description, made by way of an indicative and non-limiting example with reference to the drawings of the accompanying figures, in which:

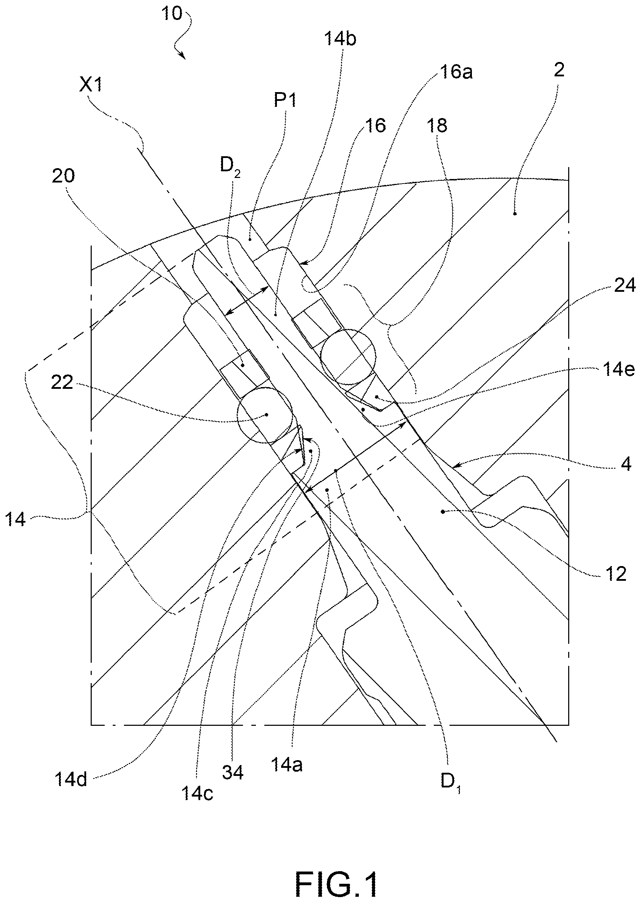

- Figure 1 is a sectional view of a region of a multifunction valve according to the present invention;

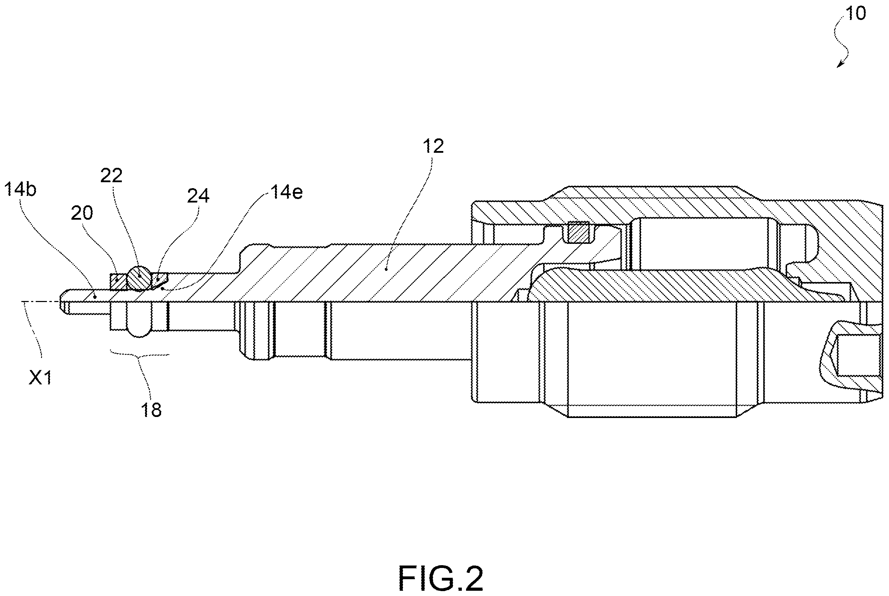

- Figure 2 shows a region of a first functional device of the multifunction valve, i.e. a thermal safety device;

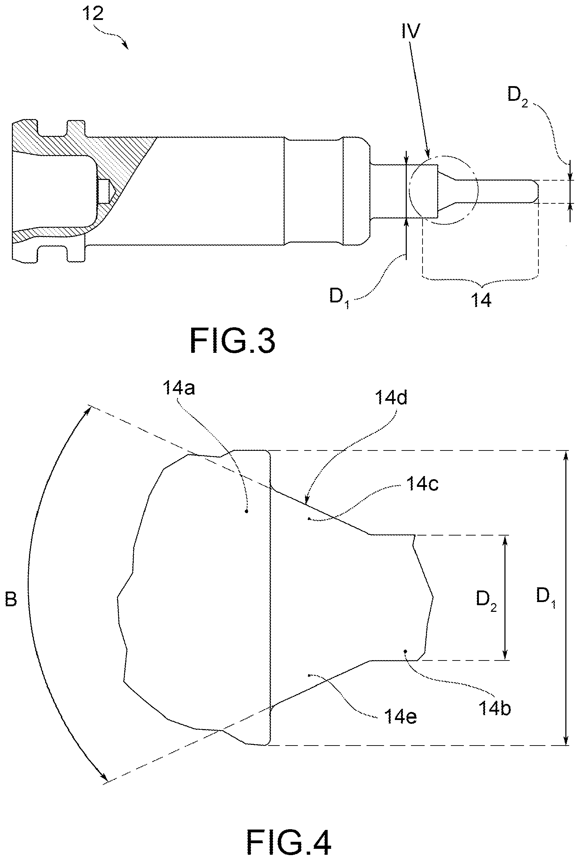

- Figure 3 shows a stem of the first functional device;
- Figure 4 shows an enlargement of the panel IV of Figure 3, which highlights a junction portion of the stem;

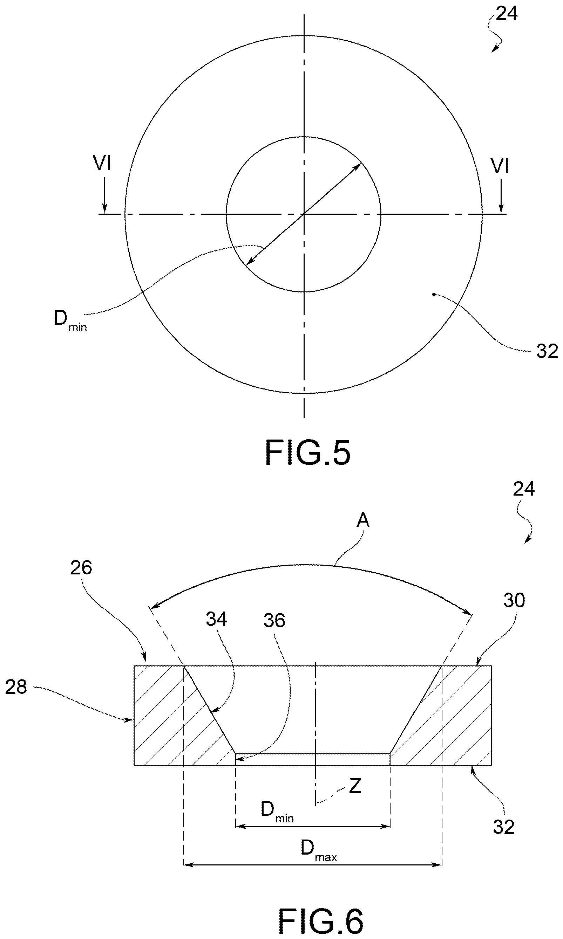

- Figure 5 shows a front view of an anti-extrusion ring of a sealing assembly according to the present invention;
- Figure 6 is a sectional view of the anti-extrusion ring, according to the section plane VI-VI of Figure 5;

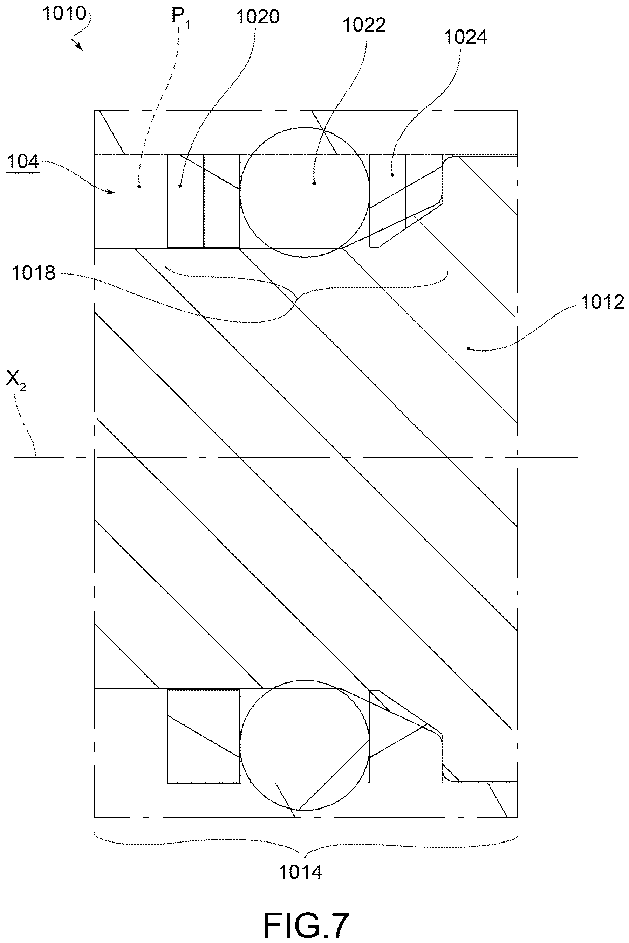

- Figure 7 shows a region of a second functional device of the multifunction valve, i.e. a manually operated shut-off tap.

A multifunction valve according to the invention comprises a valve body 2, for example made of a single piece of metal material, for example of aluminum, having a first compartment 4 for a first functional device 10 which operates, for example, as a bulb-shaped heat safety device.

For example, the first functional device 10 comprises a stem 12 slidably housed in the first compartment 4 along a first direction X1. The stem 12 comprises a guide segment 14, sealingly slidable in a sealing section 16 of the first compartment 4 having a lateral surface 16a. The guide segment 14 comprises a first portion 14a having a first diameter D1, a second end portion 14b having a second diameter D2, wherein the first diameter D1 is greater than the second diameter D2 (D1>D2), and a junction portion 14c which joins the first portion 14a to the second portion 14b, having a frustoconical lateral surface 14d converging towards the second portion 14b.

The lateral surface 14d of the junction portion 14c has an opening angle B comprised between 45 and 55°, preferably between 48 and 50°, preferably equal to 49°.

A first sealing assembly 18 is applied to the guide section 14 which ensures sealing with the lateral surface 16a of the sealing section 16.

In the sealing section 16, upstream of the first sealing assembly 18, which defines a high-pressure side, there is a high pressure p1 of the hydrogen; downstream of the first sealing assembly 18, on the other hand, a free side is defined.

From the high-pressure side towards the free side, the first sealing assembly 18 preferably comprises a positioning ring 20, fitted onto the second portion 14b of the guide segment 14 and having a clearance with respect to the lateral surface 16a of the sealing section 16.

Preferably, the positioning ring 20 has a square or rectangular cross section, circumferentially continuous and homogeneous.

Preferably, the positioning ring 20 is made of PTFE (Polytetrafluoroethylene).

The first sealing assembly 18 also comprises a primary O-ring 22, placed by the side of the positioning ring 20 and in contact therewith, fitted with interference on the second portion 14b of the guide segment 14 and in compression against the lateral surface 16a of the sealing section 16, so as to achieve the seal to gas under pressure.

Preferably, the primary O-ring 22 is made of silicone or VMQ (Vinyl-Methyl-Silicone).

Finally, the sealing assembly 18 comprises an anti-extrusion ring 24, placed by the side of the primary O-ring 22 and in contact therewith, fitted on the junction portion 14c of the guide segment 14 and in compression against the lateral surface 16a of the sealing section 16.

Preferably, the anti-extrusion ring 24 is made of PTFE (polytetrafluoroethylene).

The anti-extrusion ring 24 consists of an annular unit body 26 having a ring axis Z which, when the ring is fitted onto the guide segment 14, is coaxial to the first direction X1. The unit body 26 has a cylindrical external lateral surface 28, coaxial to the ring axis Z, a front surface 30 consisting of a flat circular crown lying on an imaginary plane orthogonal to the ring axis Z having an inner diameter Dmax, and a rear surface 32 consisting of a flat circular crown lying on an imaginary plane orthogonal to the ring axis Z having an inner diameter Dmin.

The inner diameter Dmax of the front surface 30 is greater than the inner diameter Dmin of the rear surface 32.

Internally, between the front surface 30 and the rear surface 32, the unit body 26 has a frustoconical inner lateral surface 34, coaxial to the ring axis Z. The opening angle A of the inner lateral surface 34 is comprised between 50 and 70°, preferably between 60 and 65°, preferably equal to about 62°. In any case, the opening angle A of the inner lateral surface 34 of the unit body 26 is greater than the opening angle B of the lateral surface 14d of the frustoconical portion 14c on which the anti-extrusion ring is fitted (A>B).

After having applied the anti-extrusion ring 24 to the guide segment 14, the inner lateral surface 34 is facing and in contact with the lateral surface 14c of the frustoconical segment 14b of the guide segment 14.

Preferably, moreover, between the inner lateral surface 34 and the rear surface 32, connected thereto, there is an auxiliary cylindrical surface 36, coaxial to the ring axis Z. In this variant, the transverse section of the unit body 26 therefore has the shape of a rectangle trapezoid having the major base on the front surface 30 and the minor base at the junction with the auxiliary surface 36.

Furthermore, the multifunction valve preferably has a second compartment 104 for a second functional device which operates, for example, as a manually operable shut-off tap.

For example, the second functional device comprises a stem 1012 housed in the second compartment 104 so as to be translatable along a second direction X2.

A second sealing assembly 1018 is applied to the stem 1012 of the second functional device, comprising the possible positioning ring 1020, the primary O-ring 1022 and the anti-extrusion ring 1024. The stem 1012 and the second sealing assembly 1018 are structurally and functionally similar to the stem 12 and the first sealing assembly 18 of the first functional device 10.

Preferably, moreover, the multifunction valve has a further compartment for a further functional device which operates, for example, as a temperature sensor for detecting the temperature in a predefined region inside the valve body.

Innovatively, the multifunction valve according to the present invention allows the needs of the field to be met, since the high pressure of the hydrogen operates on the anti-extrusion ring in the sense of deforming it and considerably increasing the gas tightness.

It is clear that a person skilled in the art may make changes to the multifunction valve described above in order to meet incidental needs, all falling within the scope of protection defined in the following claims.

## Claims

1. A multifunction valve for a high-pressure hydrogen supply system of a fuel cell vehicle system, comprising a valve body (2) and a functional device (10,1010), wherein:
- the valve body (2) has at least one inner compartment (4,104) having a sealing section (16) having a lateral surface (16a); and
- the functional device (10,1010) comprises:
a) a stem (12,1012) at least partially accommodated in the inner compartment (4,104), said stem (12,1012) comprising a guide segment (14) provided with a first portion (14a) having a first diameter (D1), a second end portion (14b) having a second diameter (D2) and exposed to high pressure (p1), wherein the first diameter (D1) is greater than the second diameter (D2), and a junction portion (14c) which joins the first portion (14a) to the second portion (14b), having a frustoconical lateral surface (14d) converging towards the second portion (14b) and having a predetermined opening angle (B);
b) a sealing assembly (18,1018) comprising:
i) a primary O-ring (22) fitted with interference onto the second portion (14b) of the guide segment (14) and compressed against the lateral surface (16a) of the sealing section (16) so as to obtain a pressurized gas seal; **characterized in that** the sealing assembly furthermore comprises
ii) an anti-extrusion ring (24), placed by the side of the primary O-ring (22) and in contact therewith, fitted onto the junction portion (14c) of the guide segment (14) and compressed against the lateral surface (16a) of the sealing section (16), said anti-extrusion ring (24) consisting of an annular unit body (26), a frustoconical inner lateral surface (34) in contact with the lateral surface (14d) of the junction portion (14c) of the guide segment (14) having a predetermined opening angle (A).

2. Multifunction valve according to claim 1, wherein the opening angle (A) of the inner lateral surface (34) of the anti-extrusion ring (24) is greater than the opening angle (B) of the lateral surface (14d) of the junction portion (14c).

3. Multifunction valve according to claim 2, wherein the opening angle (B) of the lateral surface (14d) of the junction portion (14c) is between 45 and 55°, preferably between 48 and 50°, preferably equal to 49°.

4. Multifunction valve according to claim 2 or 3, wherein the opening angle (A) of the inner lateral surface (34) of the anti-extrusion ring (24) is between 50 and 70°, preferably between 60 and 65°, preferably equal to 62°.

5. Multifunction valve according to any one of the preceding claims, wherein the primary O-ring (22,1022) is made of silicone or VMQ.

6. Multifunction valve according to any one of the preceding claims, wherein the anti-extrusion ring (24,1024) is made of PTFE.

7. Multifunction valve according to any one of the preceding claims, wherein the sealing assembly (18) further comprises a positioning ring (20), fitted onto the second portion (14b) of the guide segment (14) and having a clearance with respect to the lateral surface (16a) of the sealing section (16), placed by the side of the primary O-ring (22) and in contact therewith.

8. Multifunction valve according to any one of the preceding claims, wherein the stem (12,1012) of the functional device (10,1010) is sealingly translatable along a direction (X1, X2).

9. Multifunction valve according to any one of the preceding claims, wherein the functional device is a bulb-shaped heat safety device.

10. Multifunction valve according to any one of claims 1 to 8, wherein the functional device is a manually operable shut-off tap.

11. Multifunction valve according to any one of claims 1 to 8, wherein the functional device is a temperature sensor.

## Patentansprüche

1. Multifunktionsventil für ein Hochdruck-Wasserstoffversorgungssystem eines Brennstoffzellen-Fahrzeugsystems, umfassend einen Ventilkörper (2) und eine funktionale Vorrichtung (10, 1010), wobei:
- der Ventilkörper (2) zumindest einen Innenraum (4,104) mit einem Dichtungsabschnitt (16) aufweist, der eine laterale Fläche bzw. Oberfläche (16a) aufweist; und
- wobei die funktionale Vorrichtung (10, 1010) umfasst:
a) einen Schaft (12, 1012), der zumindest teilweise in dem Innenraum (4, 104) untergebracht ist, wobei der Schaft (12, 1012) ein Führungssegment (14) umfasst, das mit einem ersten Abschnitt (14a), der einen ersten Durchmesser (D1) aufweist, einem zweiten Endabschnitt (14b), der einen zweiten Durchmesser (D2) aufweist und einem hohen Druck (p1) ausgesetzt ist, wobei der erste Durchmesser (D1) größer als der zweite Durchmesser (D2) ist, und einem Verbindungsabschnitt (14c) versehen ist, der den ersten Abschnitt (14a) mit dem zweiten Abschnitt (14b) verbindet, und eine kegelstumpfförmige laterale Fläche bzw. Oberfläche (14d) aufweist, die in Richtung des zweiten Abschnitts (14b) konvergiert und einen vorbestimmten Öffnungswinkel (B) aufweist;
b) eine Dichtungsanordnung (18, 1018), die umfasst:
i) einen primären O-Ring (22), der mit Übermaß auf den zweiten Abschnitt (14b) des Führungssegments (14) aufgepasst ist und gegen die laterale Fläche (16a) des Dichtungsabschnitts (16) gedrückt wird, um eine Druckgasdichtung zu erhalten;
**dadurch gekennzeichnet, dass** die Dichtungsanordnung ferner umfasst:
ii) einen Antiextrusionsring (24), der an der Seite des primären O-Rings (22) platziert und mit diesem in Kontakt ist, auf den Verbindungsabschnitt (14c) des Führungssegments (14) aufgepasst und gegen die laterale Fläche (16a) des Dichtungsabschnitts (16) gedrückt ist, wobei der Antiextrusionsring (24) aus einem ringförmigen Einheitskörper (26) besteht, wobei eine kegelstumpfförmige innere laterale Fläche (34) in Kontakt mit der lateralen Fläche (14d) des Verbindungsabschnitts (14c) des Führungssegments (14) einen vorbestimmten Öffnungswinkel (A) aufweist.

2. Multifunktionsventil nach Anspruch 1, wobei der Öffnungswinkel (A) der inneren lateralen Fläche (34) des Antiextrusionsrings (24) größer ist als der Öffnungswinkel (B) der lateralen Fläche (14d) des Verbindungsabschnitts (14c).

3. Multifunktionsventil nach Anspruch 2, wobei der Öffnungswinkel (B) der lateralen Fläche (14d) des Verbindungsabschnitts (14c) zwischen 45 und 55°, vorzugsweise zwischen 48 und 50°, vorzugsweise gleich 49° ist.

4. Multifunktionsventil nach Anspruch 2 oder 3, wobei der Öffnungswinkel (A) der inneren lateralen Fläche (34) des Antiextrusionsrings (24) zwischen 50 und 70°, vorzugsweise zwischen 60 und 65°, vorzugsweise gleich 62° ist.

5. Multifunktionsventil nach einem der vorhergehenden Ansprüche, wobei der primäre O-Ring (22, 1022) aus Silikon oder VMQ besteht.

6. Multifunktionsventil nach einem der vorhergehenden Ansprüche, wobei der Antiextrusionsring (24, 1024) aus PTFE besteht.

7. Multifunktionsventil nach einem der vorhergehenden Ansprüche, wobei die Dichtungsanordnung (18) ferner einen Positionierungsring (20) umfasst, der auf den zweiten Abschnitt (14b) des Führungssegments (14) aufgepasst ist und einen Abstand bzw. Freiraum in Bezug auf die laterale Fläche (16a) des Dichtungsabschnitts (16) aufweist, und der an der Seite des primären O-Rings (22) platziert und mit diesem in Kontakt ist.

8. Multifunktionsventil nach einem der vorhergehenden Ansprüche, wobei der Schaft (12, 1012) der funktionalen Vorrichtung (10, 1010) abdichtend entlang einer Richtung (X1, X2) verschiebbar ist.

9. Multifunktionsventil nach einem der vorhergehenden Ansprüche, wobei die funktionale Vorrichtung eine kolbenförmige Hitzeschutzvorrichtung ist.

10. Multifunktionsventil nach einem der Ansprüche 1 bis 8, wobei die funktionale Vorrichtung ein manuell bedienbarer Absperrhahn ist.

11. Multifunktionsventil nach einem der Ansprüche 1 bis 8, wobei die funktionale Vorrichtung ein Temperatursensor ist.

## Revendications

1. Soupape multifonction pour un système d'alimentation en hydrogène haute pression d'un système de véhicule à piles à combustible, comprenant un corps de soupape (2) et un dispositif fonctionnel (10, 1010), dans laquelle :
- le corps de soupape (2) a au moins un compartiment interne (4, 104) ayant une section d'étanchéité (16) ayant une surface latérale (16a) ;
- le dispositif fonctionnel (10, 1010) comprend :
a) une tige (12, 1012) au moins partiellement reçue dans le compartiment interne (4, 104), ladite tige (12, 1012) comprenant un segment de guidage (14) doté d'une première partie (14a) ayant un premier diamètre (D1), d'une seconde partie (14b) d'extrémité ayant un second diamètre (D2) et exposée à une haute pression (p1), dans laquelle le premier diamètre (D1) est supérieur au second diamètre (D2), et une partie de jonction (14c) qui joint la première partie (14a) à la seconde partie (14b), ayant une surface latérale (14d) tronconique convergeant en direction de la seconde partie (14b) et ayant un angle d'ouverture (B) prédéterminé ;
b) un ensemble d'étanchéité (18, 1018) comprenant :
i) un joint torique primaire (22) ajusté avec interférence sur la seconde partie (14b) du segment de guidage (14) et comprimé contre la surface latérale (16a) de la section d'étanchéité (16) de manière à obtenir un joint d'étanchéité au gaz sous pression ; **caractérisé en ce que** l'ensemble d'étanchéité comprend en outre
ii) une bague anti-extrusion (24), placée sur le côté du joint torique primaire (22) et en contact avec celui-ci, ajustée sur la partie de jonction (14c) du segment de guidage (14) et comprimée contre la surface latérale (16a) de la section d'étanchéité (16), ladite bague anti-extrusion (24) étant constituée d'un corps d'unité annulaire (26), une surface latérale interne (34) tronconique en contact avec la surface latérale (14d) de la partie de jonction (14c) du segment de guidage (14) ayant un angle d'ouverture prédéterminé (A).

2. Soupape multifonction selon la revendication 1, dans laquelle l'angle d'ouverture (A) de la surface latérale interne (34) de la bague anti-extrusion (24) est supérieur à l'angle d'ouverture (B) de la surface latérale (14d) de la partie de jonction (14c).

3. Soupape multifonction selon la revendication 2, dans laquelle l'angle d'ouverture (B) de la surface latérale (14d) de la partie de jonction (14c) est entre 45 et 55°, de préférence entre 48 et 50°, de préférence égal à 49°.

4. Soupape multifonction selon la revendication 2 ou 3, dans laquelle l'angle d'ouverture (A) de la surface latérale interne (34) de la bague anti-extrusion (24) est entre 50 et 70°, de préférence entre 60 et 65°, de préférence égal à 62°.

5. Soupape multifonction selon l'une quelconque des revendications précédentes, dans laquelle le joint torique primaire (22, 1022) est composé de silicone ou de VMQ.

6. Soupape multifonction selon l'une quelconque des revendications précédentes, dans laquelle la bague anti-extrusion (24, 1024) est composée de PTFE.

7. Soupape multifonction selon l'une quelconque des revendications précédentes, dans laquelle l'ensemble d'étanchéité (18) comprend en outre une bague de positionnement (20), ajustée sur la seconde partie (14b) du segment de guidage (14) et ayant un dégagement par rapport à la surface latérale (16a) de la section d'étanchéité (16), placée sur le côté du joint torique primaire (22) et en contact avec celui-ci.

8. Soupape multifonction selon l'une quelconque des revendications précédentes, dans laquelle la tige (12, 1012) du dispositif fonctionnel (10, 1010) peut être translatée de manière étanche le long d'une direction (X1, X2).

9. Soupape multifonction selon l'une quelconque des revendications précédentes, dans laquelle le dispositif fonctionnel est un dispositif de sécurité thermique en forme d'ampoule.

10. Soupape multifonction selon l'une quelconque des revendications 1 à 8, dans laquelle le dispositif fonctionnel est un robinet d'arrêt à actionnement manuel.

11. Soupape multifonction selon l'une quelconque des revendications 1 à 8, dans laquelle le dispositif fonctionnel est un capteur de température.
